# EUROPÄISCHE PATENTANMELDUNG

(11) **EP 2 939 567 A1**
(43) Veröffentlichungstag der Anmeldung: **04.11.2015**
(21) Anmeldenummer: 15001278.9
(22) Anmeldetag: 30.04.2015
(51) Int. Cl.: A47B 96/20

(54) **VERFAHREN ZUR HERSTELLUNG EINER VERBUNDPLATTE UND DANACH HERGESTELLTE VERBUNDPLATTE**

(30) Priorität: 30.04.2014 DE 102014106136
(71) Anmelder: Schütte, Ulrich, 32609 Hüllhorst (DE)
(72) Erfinder: Schütte, Ulrich, 32609 Hüllhorst (DE)
(74) Vertreter: Rolf, Gudrun

(57) **Zusammenfassung**

Es wird eine Verbundplatte, insbesondere eine Möbelfrontplatte (1), aus einem Verbund einer Frontplatte (2) mit einer Trägerplatte (3) und mit einem Kantenprofil (4) sowie ein Verfahren zur Herstellung dieser Verbundplatte zur Verfügung gestellt, welches nur einen geringen technischen Aufwand und einen verringerten Arbeitsaufwand erfordert und dabei schnell, einfach und wirtschaftlich durchführbar ist, was dadurch erzielt wird, dass die Trägerplatte (3) in der Fläche größer zugeschnitten wird als die Abmessungen einer fertig konfektionierten Frontplatte (2) betragen, anschließend die Frontplatte (2) und die Trägerplatte (3) über eine Klebeschicht (5) großflächig so zu einer Verbundplatte (8) miteinander verklebt und zur Aushärtung fixiert werden, sodass umlaufend ein seitlicher Überstand (6) der Trägerplatte (3) entsteht, woraufhin die jeweiligen Stirnseiten (7) der Frontplatte (2) oder deren Kanten als Bezugsgrößen für die anschließende Formatierung und Bekanntung der entsprechenden Seiten der Verbundplatte (8) genutzt werden und der Überstand (6) maschinell entfernt und danach das Kantenprofil (4) angeordnet wird.

## Beschreibung

Die Erfindung betrifft ein Verfahren zur Herstellung einer Verbundplatte wie einer Möbelfrontplatte aus einem Verbund einer Frontplatte mit einer Trägerplatte und mit einem daran angeleimten Kantenprofil und eine nach dem Verfahren hergestellte Möbelfrontplatte.

Solche Möbelfrontplatten sind in vielerlei Ausführungsformen bekannt und wurden in der Vergangenheit so gefertigt, dass zunächst eine Spanplatte über doppelseitige Anlagen formatiert und daraufhin umlaufend mit einer Kante versehen wurde, welche höher war als die Spanplatte selber. In diesen so erzeugten Rahmen musste anschließend durch Vermessen eine passgenaue Glasscheibe angefertigt werden, um exakt in die zuvor gefertigte Holzkonstruktion hineinzupassen.

Nachteilig an einem solchen vorbekannten Herstellungsverfahren ist, dass dieses nur mit erheblichen technischem Aufwand zu realisieren und zudem sehr zeitaufwändig ist.

Aufgabe der Erfindung ist es deshalb eine Verbundplatte, insbesondere eine Möbelfrontplatte und ein Verfahren zur Herstellung einer solchen Verbundplatte zur Verfügung zu stellen, welches nur einen geringen technischen Aufwand und einen verringerten Arbeitsaufwand erfordert und dabei schnell und einfach ausführbar ist, so dass sich damit beispielsweise eine Möbelfrontplatte erheblich wirtschaftlicher herstellen lässt.

Die Lösung dieser Aufgabe ergibt sich in Verbindung mit dem Oberbegriff des ersten Patentanspruchs erfindungsgemäß im Zusammenhang mit dessen kennzeichnenden Merkmalen. Dadurch, dass die Trägerplatte in der Fläche größer zugeschnitten wird als die Abmessungen einer fertig konfektionierten Frontplatte betragen, die Frontplatte und die Trägerplatte anschließend über eine Klebeschicht großflächig so zu einer Verbundplatte miteinander verklebt und zur Aushärtung fixiert werden, dass umlaufend ein seitlicher Überstand der Trägerplatte entsteht und die jeweiligen Stirnseiten der Frontplatte oder deren Kanten als Bezugsgrößen für die anschließende Formatierung und Bekanntung der entsprechenden Seiten der Verbundplatte genutzt werden, lässt sich der Überstand maschinell extrem maßgenau entfernen und daraufhin das Kantenprofil vor den Stirnseiten der Verbundplatte anordnen.

Auf diese Weise lässt sich eine Einzelfertigung von unterschiedlichsten Maßen von Möbelfrontplatten nacheinander realisieren, wobei keine Abmessungstoleranzen bei den Abmessungen einer Möbelfrontplatte entstehen, da hier, umgekehrt wie dies beim bekannten Stand der Technik, die Kante der Frontplatte die Größe der Trägerplatte festlegt.

Dies Verfahren eignet sich zur Herstellung der unterschiedlichsten Verbundplatten für viele verschiedene Herstellungszwecke, insbesondere aber für Möbelfrontplatten und ist nahezu unabhängig von der Auswahl der zur Herstellung einer solchen Möbelfrontplatte benötigten Ausgangsmaterialien.

Vorteilhafte Ausgestaltungen des Verfahrens ergeben sich mit und in Kombination aus den nachfolgenden Unteransprüchen.

Vorteilhafterweise kann als Frontplatte eine Platte aus Glas, Keramik oder Stein verwendet werden, also aus einem sehr harten und widerstandsfähigen, ggf. auch anderem nur aufwändig zu bearbeitendem Material, welches das Vorhandensein einer formstabilen Stirnseite oder Kante als Bezugsgröße für die anschließende Formatierung und Bekanntung der Verbundplatte gewährleistet.

Als Trägerplatten werden bevorzugterweise Platten aus Holzwerkstoffen oder Kunststoffen verwendet, die sich dazu eignen, die erforderlichen Beschläge einer Möbelfrontplatte aufzunehmen.

Entsprechend einer besonders bevorzugten Ausführungsform des Gegenstandes des erfinderischen Verfahrens wird die Stirnseite der Frontplatte oder deren Kante von einer Anschlagrolle oder einer Anschlagschiene einer Fräsvorrichtung als Referenzgröße genutzt, so dass sich der Überstand einer Trägerplatte einfach und sicher entfernen lässt, wobei eine solche Anschlagrolle auch konkaven und konvexen Körperkanten einer Frontplatte nachlaufen und eine Fräsvorrichtung entsprechend nachgeführt werden würde, so dass sich mit dem erfinderischen Verfahren einfach und sehr wirtschaftlich auch Möbelfrontplatten herstellen lassen, die nicht rechtwinklig und/ oder nur gerade Seitenflächen aufweisen, sondern beliebig geschwungen ausgeführt sein können.

Eine nach diesem erfinderischen Verfahren hergestellte Verbundplatte ist deswegen stets extrem maßhaltig und sehr wirtschaftlich, da zum einen die Verfahrensschritte zu ihrer Herstellung minimiert sind, ebenso wie die Anforderungen an die erforderliche Maschinentechnik.

Nachfolgend werden eine Möbelfrontplatte und das Verfahren zu ihrer Herstellung anhand von Zeichnungen näher beschrieben. Es zeigen:
- Fig. 1: eine Seitenansicht einer auf einer Trägerplatte verklebten Frontplatte mit seitlichem Überstand,
- Fig. 2: eine Draufsicht auf den Gegenstand der Fig. 1, und
- Fig 3.: eine vergrößerte Teilansicht einer fertigen Möbelfrontplatte.

Die Verbundplatte 1 besteht aus einem Verbund einer Frontplatte 2 mit einer Trägerplatte 3 und einem Kantenprofil 4, wobei die Trägerplatte 3 in der Fläche größer zugeschnitten wird als die Abmessungen einer fertig konfektionierten Frontplatte 2 betragen. Anschließend wird die Frontplatte 2 und die Trägerplatte 3 über eine Klebeschicht 5 großflächig so zu einer Verbundplatte 8 miteinander verklebt und sodann zur Aushärtung fixiert, dass umlaufend ein seitlicher Überstand 6 der Trägerplatte 3 entsteht, woraufhin die jeweiligen Stirnseiten 7 der Frontplatte 2 als Bezugsgröße für die anschließende Formatierung und Bekanntung der entsprechenden Seite der Verbundplatte 8 genutzt werden und der Überstand 6 maschinell entfernt und danach das Kantenprofil 4 angeordnet wird.

Eine Frontplatte 2 kann dabei aus Glas, Keramik oder Stein bestehen und eine Trägerplatte 3 aus Holzwerkstoffen oder Kunststoffen, wobei als Vorgabe für die Werkstoffauswahl jedoch nur die Qualität der Stirnseite einer Frontplatte 2 maßgeblich ist, die so widerstandskräftig sein muss, dass sie oder ihre Kante als Referenzfläche für eine Anschlagrolle oder eine Anschlagschiene einer Fräsvorrichtung nutzbar ist.

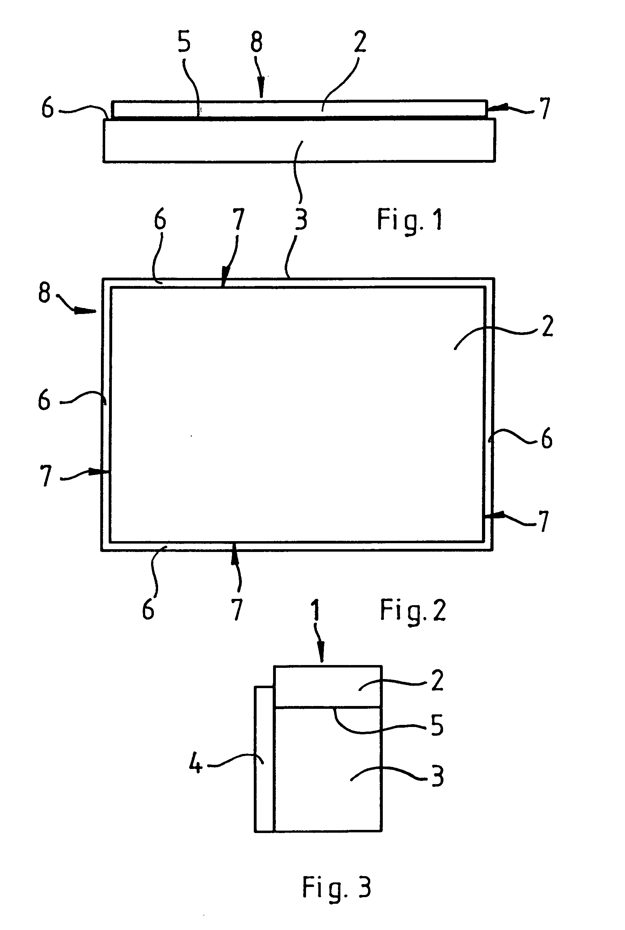

Wie in Fig. 3 ausschnittsweise dargestellt ist, entsteht mit dem erfindungsgemäßen Verfahren eine Verbundplatte mit einer Frontplatte 2, einer Trägerplatte 3 und einem vor deren Stirnseiten angeordneten Kantenprofil 4.

## Patentansprüche

1. Verfahren zur Herstellung einer Verbundplatte wie einer Möbelfrontplatte (1), aus einem Verbund einer Frontplatte (2) mit einer Trägerplatte (3) und mit einem Kantenprofil (4), **dadurch gekennzeichnet, dass** die Trägerplatte (3) in der Fläche größer zugeschnitten wird als die Abmessungen einer fertig konfektionierten Frontplatte (2) betragen, anschließend die Frontplatte (2) und die Trägerplatte (3) über eine Klebeschicht (5) großflächig so zu einer Verbundplatte (8) miteinander verklebt und zur Aushärtung fixiert werden, dass umlaufend ein seitlicher Überstand (6) der Trägerplatte (3) entsteht, woraufhin die jeweiligen Stirnseiten (7) der Frontplatte (2) oder deren Kanten als Bezugsgrößen für die anschließende Formatierung und Bekanntung der entsprechenden Seiten der Verbundplatte (8) genutzt werden und der Überstand (6) maschinell entfernt und danach das Kantenprofil (4) angeordnet wird.

2. Verfahren nach Anspruch 1, **dadurch gekennzeichnet, dass** als Frontplatte (2) eine Platte aus Glas, Keramik oder Stein verwendet wird.

3. Verfahren nach einem der vorgenannten Ansprüche, **dadurch gekennzeichnet, dass** als Trägerplatten (3) Platten aus Holzwerkstoffen und/ oder Kunststoffen verwendet werden.

4. Verfahren nach einem der vorgenannten Ansprüche, **dadurch gekennzeichnet, dass** die Stirnseite (7) der Frontplatte oder deren Kante von einer Anschlagrolle oder einer Anschlagschiene einer Fräsvorrichtung als Referenzgröße genutzt wird.

5. Möbelfrontplatte, **dadurch gekennzeichnet, dass** sie nach einem der in einem der Ansprüche 1 bis 4 beanspruchten Verfahren hergestellt ist.
